# EUROPEAN PATENT APPLICATION

(11) **EP 4 847 899 A1**
(43) Date of publication of application: **02.12.2026**
(21) Application number: 26181459.4
(22) Date of filing: 27.05.2026
(51) Int. Cl.: G01M 11/00, H04B 10/071

(54) **OTDR METHOD ADAPTED FOR MULTIFIBER CABLES**

(30) Priority: 30.05.2025 US 202563814521 P
(71) Applicant: EXFO Inc., Québec, QC G1M 2K2 (CA)
(72) Inventor: GOSSELIN-BADAROUDINE, Pascal, Quebec, G1M 2K2 (CA); LEVESQUE, Remi, Quebec, G1M 2K2 (CA); LECLERC, Michel, Quebec, G1M 2K2 (CA)
(74) Representative: Gregory, Alexandra Louise

(57) **Abstract**

There are provided an OTDR method and an OTDR device adapted to gain dynamic range (to improve measurement time and/or detection sensitivity) by performing an OTDR event detection on an average OTDR trace (or summed trace) obtained by numerically averaging (or summing) OTDR measurements obtained for multiple co-located optical fiber links, such as the multiple optical fiber links of a same optical fiber cable, such as a ribbon, or the multiple optical channels of a multi-core fiber. Such an approach has the advantage of increasing the signal-to-noise ratio by a factor related to the number of co-located optical fiber links.

## Description

### TECHNICAL FIELD

The present description generally relates to Optical Time-Domain Reflectometry (OTDR), and more particularly to OTDR measurements performed on multifiber cables.

### BACKGROUND

Optical Time-Domain Reflectometry (OTDR - also used to refer to the corresponding device) is widely employed for characterization of optical fiber links. OTDR is a diagnostic technique where a test signal comprising a light pulse is launched in an optical fiber link and returning light, arising from backscattering and reflections along the fiber link, is detected and analyzed. Various "events" along the fiber link can be detected and characterized through a proper analysis of the returning light in the time domain and insertion loss of the fiber link under test, as well as each component along the link, can be characterized.

Conventionally, OTDRs are used to characterize individual optical fiber links comprising single-mode fibers (SMF), such as SMF-28, and multimode fibers, such as OM2, OM3 or OM4.

A key factor to OTDR performance is the dynamic range. Another key factor to OTDR performance is the detection sensitivity, which is related to the signal to noise ratio. The detection sensitivity is of particular importance for detecting low-loss non-reflective events on an optical fiber link, which is of particular interest for documenting the construction of optical fiber links. High dynamic range and/or high sensitivity can be achieved using high quality equipment (strong laser, low noise electronic) or by increasing the averaging time to reduce the noise. Of course, averaging implies longer acquisition time.

Furthermore, some OTDR instruments are currently being developed to characterize multifiber cable links and/or optical fiber ribbons. With the increasing volume of OTDR testing, shorter acquisition time becomes essential. For such applications, the acquisition time therefore becomes a big challenge, especially when high dynamic range and high detection sensitivity are required.

OTDR acquisition time can be minimized using long pulse widths, which increase the level of backscattered signal received from the optical fiber link under test and thereby minimizes the required averaging time for a given dynamic range specification. However, longer pulses also mean a lower spatial resolution. Long-pulse acquisitions therefore tend to hide events that are too close from one another and are at odds with a strong documentation of the optical fiber link.

There therefore remains a need for an OTDR characterization method which allows to reduce the acquisition time without sacrificing the dynamic range, the detection sensitivity and the spatial resolution.

### SUMMARY

The present invention seeks to eliminate, or at least mitigate, some disadvantages of the prior art, or at least provide an alternative.

There are therefore provided an OTDR method and an OTDR device adapted to gain dynamic range (to improve measurement time and/or detection sensitivity) by performing an OTDR event detection on an average OTDR trace (or summed trace) obtained by numerically averaging (or summing) OTDR measurements obtained for multiple co-located optical fiber links, such as the multiple optical fiber links of a same optical fiber cable, such as a ribbon, or the multiple optical channels of a multi-core fiber. The optical fiber links are herein said to be correlated in that they can be assumed to share the same optical fiber lengths and the same set of optical components (splices, mating connectors, splitters, etc.) distributed at the same positions along each optical fiber link. Such an approach has the advantage of increasing the signal-to-noise ratio by a factor related to the number of co-located optical fiber links.

This method takes advantage of the mathematical properties of the noise present in OTDR traces to increase the event detection sensitivity on correlated optical fiber links. Averaging data from distinct optical fiber links helps reduce both optical and electronic noise. As a result, the proposed method can shorten measurement time when analyzing related optical fiber links and improve sensitivity for detecting small-loss events such as splices.

The resulting OTDR trace offers a cleaner and more robust OTDR measurement by aggregating event data across multiple co-located optical fiber links. The average trace also improves usability by offering a consolidated view of all detected events on a single signal with reduced noise. Furthermore, it serves as a reference for templating, enabling the reinsertion of previously missed events into individual fiber measurements. Consequently, the method improves the fidelity of each OTDR trace and the accuracy of event detection across the co-located optical fiber links.

In accordance with one aspect, there is provided an OTDR method comprising:
performing an OTDR acquisition toward each of a plurality of optical fiber links, wherein each OTDR acquisition is performed by propagating in the corresponding optical fiber link, a pulsed test signal and detecting corresponding return light from the optical fiber link so as to obtain an OTDR trace representing backscattered and reflected light as a function of distance in the optical fiber links, thereby obtaining a plurality of OTDR traces respectively corresponding to said plurality of optical fiber links;
combining said plurality of OTDR traces to provide an average OTDR trace which combines OTDR acquisitions respectively performed toward said plurality of optical fiber links; and
from said average OTDR trace, detecting and deriving a distance of at least one event along the optical fiber links.

In accordance with another aspect, there is provided an OTDR device comprising:
an OTDR acquisition device connectable toward an end of an optical fiber link for performing an OTDR acquisition toward each of a plurality of optical fiber links, wherein each OTDR acquisition is performed by propagating in the corresponding optical fiber link, a pulsed test signal and detecting corresponding return light from the optical fiber link so as to obtain an OTDR trace representing backscattered and reflected light as a function of distance in the optical fiber links, thereby obtaining a plurality of OTDR traces respectively corresponding to said plurality of optical fiber links; and
a processing unit receiving the plurality of OTDR traces and configured for:
   combining said plurality of OTDR traces to provide an average OTDR trace which combines OTDR acquisitions respectively performed toward said plurality of optical fiber links; and
   from said average OTDR trace, detecting and deriving a distance of at least one event along the optical fiber links.

In accordance with another aspect, there is provided a non-transitory computer-readable storage medium comprising instructions that, when executed, cause a processor to perform the steps of:
receiving a set of OTDR traces obtained from OTDR acquisitions performed toward each of a plurality of optical fiber links, wherein each OTDR acquisition is performed by propagating in the corresponding optical fiber link, a pulsed test signal and detecting corresponding return light from the optical fiber link so as to obtain an OTDR trace representing backscattered and reflected light as a function of distance in the optical fiber links, thereby obtaining a plurality of OTDR traces respectively corresponding to said plurality of optical fiber links;
combining said plurality of OTDR traces to provide an average OTDR trace which combines OTDR acquisitions respectively performed toward said plurality of optical fiber links; and
from said average OTDR trace, detecting and deriving a distance of at least one event along the optical fiber links.

In accordance with another aspect, there is provided a computer program comprising instructions that, when executed by a processor, cause the processor to perform the steps of:
receiving a set of OTDR traces obtained from OTDR acquisitions performed toward each of a plurality of optical fiber links, wherein each OTDR acquisition is performed by propagating in the corresponding optical fiber link, a pulsed test signal and detecting corresponding return light from the optical fiber link so as to obtain an OTDR trace representing backscattered and reflected light as a function of distance in the optical fiber links, thereby obtaining a plurality of OTDR traces respectively corresponding to said plurality of optical fiber links;
combining said plurality of OTDR traces to provide an average OTDR trace which combines OTDR acquisitions respectively performed toward said plurality of optical fiber links; and
from said average OTDR trace, detecting and deriving a distance of at least one event along the optical fiber links.

In some embodiments, the method or system may comprise one or more of the following features, considered alone or according to all technically possible combinations.

In some embodiments, using the distance of the detected at least one event derived from the average OTDR trace, the at least one event for a given optical fiber link among the plurality of optical fiber links is characterized based on the OTDR trace corresponding to the given optical fiber link.

In some embodiments, the step of characterizing the at least one event comprises estimating a value of reflectance and a value of loss associated with the at least one event.

In some embodiments, the at least one event corresponds to a splice and the step of characterizing the at least one event comprises estimating a value of a splice loss associated with the splice for the given optical fiber link.

In some embodiments, from the average OTDR trace, a value of at least one of an average reflectance and an average loss associated with the at least one event over the plurality of optical fiber links is derived.

In some embodiments, from said average OTDR trace, a plurality of events along the optical fiber links are detected and distances are derived to produce a list of events defining the detected events based on their respective distance; and analyzing the OTDR trace corresponding to a given optical fiber link among the plurality of optical fiber links is analyzed using the produced list of events to derive therefrom a table of events defining a distance value and at least one of an insertion loss value and reflectance value for each event of the table.

In some embodiments, based on one of the plurality of OTDR traces, at least another event which is missing from the list of events produced from the average OTDR trace is detected and its distance is derived; and the at least another event is added to the list of events.

In some embodiments, a plurality of OTDR acquisitions are performed for the given optical fiber link using mutually different pulse widths of the pulsed test signal to obtain a corresponding plurality of OTDR traces for the given optical fiber link; and the step of characterizing the at least one event for the given optical fiber link is based on the plurality of OTDR traces corresponding to the given optical fiber link.

In some embodiments, the plurality of OTDR traces respectively corresponding to the plurality of optical fiber links are not all performed with the same pulse width of said pulsed test signal and the OTDR traces is processed to emulate a pulse response which corresponds to a resolution that is smaller or equal to the lowest resolution among the individual traces to be averaged.

In some embodiments, individual OTDR traces from the plurality of OTDR traces are compared from one another to detect duplicate OTDR traces based on a similarity of a backscattering pattern.

In some embodiments, the detected duplicate OTDR traces are removed from the plurality of OTDR traces before combining said plurality of OTDR traces to provide an average OTDR trace.

In this specification, the term "average OTDR trace" is intended to refer to a combination of a plurality of OTDR traces which may involve summing or averaging values of the plurality of OTDR traces to obtain a summed or averaged OTDR trace.

Further features and advantages of the present invention will become apparent to those of ordinary skill in the art upon reading of the following description, taken in conjunction with the appended drawings.

The following description is provided to gain a comprehensive understanding of the methods, apparatus and/or systems described herein. Various changes, modifications, and equivalents of the methods, apparatuses and/or systems described herein will suggest themselves to those of ordinary skill in the art. Description of well-known functions and structures may be omitted to enhance clarity and conciseness.

Although some features may be described with respect to individual exemplary embodiments, aspects need not be limited thereto such that features from one or more exemplary embodiments may be combined with other features from one or more other exemplary embodiments.

### BRIEF DESCRIPTION OF THE DRAWINGS

Figure 1 is a graph showing an OTDR trace obtained by OTDR measurement and illustrating the dynamic range of such OTDR measurement.
Figure 2 is a flowchart illustrating an OTDR method for characterizing optical events along an optical fiber link, in accordance with one embodiment.
Figure 3 comprises Figures 3A and 3B, which illustrate the effect of averaging OTDR traces acquired over distinct optical fiber links, wherein Figure 3B is a graph showing a zoomed-in view of a portion of the graph shown in Figure 3A.
Figure 4 is a graph showing an individual OTDR trace (single trace) compared to an average OTDR trace obtained by averaging individual OTDR traces acquired over a plurality of optical fiber links, zoomed on a region of the trace where the noise is dominated by electronic noise.
Figure 5 is a graph showing an individual OTDR trace (single trace) compared to an average OTDR trace obtained by averaging individual OTDR traces acquired over a plurality of optical fiber links, zoomed on a region of the trace where the noise is dominated by coherent noise.
Figure 6A is a diagram illustrating events detected on individual optical fiber links compared to those detected on an average OTDR trace, as well as a template generated therefrom.
Figure 6B is a diagram illustrating events detected on individual optical fiber links compared to those detected on an average OTDR trace, as well as a template generated therefrom, in a case where one event detected on one optical fiber link is not detected on the average OTDR trace.
Figure 7 illustrates a network configuration comprising an optical switch.
Figure 8 illustrates individual OTDR traces acquired over the network configuration of Figure 7 as well as an average OTDR derived therefrom.
Figure 9 is a graph showing a zoomed-in view of the F2 segment of the traces of Figure 8.
Figure 10 is a graph showing a zoomed-in view of the F1 segment of the traces of Figure 8.
Figure 11 is a block diagram illustrating an example architecture of an OTDR device suitable for implementing the method of Figure 2, in accordance with one embodiment.
Figure 12 is a block diagram illustrating an example architecture of an OTDR acquisition device of the OTDR device of Figure 11, in accordance with one embodiment.

It will be noted that throughout the drawings, like features are identified by like reference numerals. In the following description, similar features in the drawings have been given similar reference numerals and, to not unduly encumber the figures, some elements may not be indicated on some figures if they were already identified in a preceding figure. It should be understood herein that elements of the drawings are not necessarily depicted to scale, since emphasis is placed upon clearly illustrating the elements and structures of the present embodiments. Some mechanical or other physical components may also be omitted in order to not encumber the figures.

Furthermore, throughout the drawings, and especially in block diagrams and flowcharts, dash lines are generally used to indicate that a component is intended to be optional.

### DETAILED DESCRIPTION

Optical Time-Domain Reflectometry (OTDR - also used to refer to the corresponding device) is widely employed for characterization of optical fiber links. OTDR is a diagnostic technique where a test signal in the form of light pulses is launched in the optical fiber link under test and the return light signal, arising from backscattering and reflections along the link, is detected and analyzed. The acquired power level of the return light signal as a function of time is referred to as an "OTDR trace" or a "reflectometric trace", where the time scale is representative of distance between the OTDR acquisition device and a point along the fiber link. Herein, the process of launching a test signal and acquiring the return light signal to obtain therefrom an OTDR trace is referred to as an "OTDR acquisition".

In the following description, techniques that are generally known to the ones skilled in the art of OTDR measurement and OTDR trace processing and analysis will not be explained or detailed and in this respect, the reader is referred to available literature in the art. Such techniques that are considered to be known may include, e.g., signal processing methods for identifying and characterizing events from an OTDR trace. Similarly, an OTDR acquisition device is understood to comprise conventional optical hardware and electronics as known in the art for performing OTDR acquisitions on an optical fiber link.

Each OTDR acquisition is understood to refer to the actions of propagating a test signal comprising one or more test light pulses having the same pulse width in the optical fiber link, and detecting corresponding return light signal from the optical fiber link as a function of time. A test light-pulse signal travelling along the optical fiber link will return towards its point of origin either through (distributed) backscattering or (localized) reflections. The acquired power level of the return light signal as a function of time is referred to as the OTDR trace, where the time scale is representative of distance between the OTDR acquisition device and a point along the optical fiber link. Light acquisitions may be repeated with varied pulse width values to produce a separate OTDR trace for each test pulse width.

One skilled in the art will readily understand that in the context of OTDR methods and systems, each light acquisition generally involves propagating a large number of substantially identical light pulses in the optical fiber link and averaging the results. In this case, the result obtained from averaging will herein be referred to as an OTDR trace. It will also be understood that other factors may need to be controlled during the light acquisitions or from one light acquisition to the next, such as gain settings, pulse power, etc. as is well known to those skilled in the art.

"Backscattering" refers to Rayleigh scattering occurring from the interaction of the travelling light with the optical fiber media all along the fiber link, resulting in a generally sloped background light (in logarithmic units, i.e. dB, on the ordinate) on the OTDR trace, whose intensity disappears at the end of the range of the travelling pulse. "Events" along the fiber will generally result in a more localized drop of the backscattered light on the OTDR trace, which is attributable to a localized loss, and/or in a localized reflection peak. It will be understood that an "event" characterized by the OTDR method described herein may be generated by any component or perturbation along the fiber link which affects the returning light, such as fusion splices, mating connectors, optical splitters, ends of fiber, fiber breakages, bends, etc. "Events" along the characterized optical fiber link may associated with a type of component or perturbation, which will be referred to as a type of event. Typically, an event may be generated by an optical fiber splice along the fiber link, which is characterized by a localized loss with little or no reflection. Mating connectors can also generate events that typically present reflectance, although these may be impossible to detect in some instances. OTDR methods and systems may also provide for the identification of events such as a fiber breakage, characterized by substantial localized loss and, frequently, a concomitant reflection peak, as well as loss resulting from a bend in the fiber. Finally, any other component along the fiber link may also be manifest as an "event" generating localized loss.

OTDR technology can be implemented in different manners and advanced OTDR technology typically involves multi-pulse acquisitions and analysis whereby the OTDR acquisition device makes use of multiple acquisitions performed with different pulse widths in order to provide different spatial resolutions and noise level conditions for event detection and measurement along the optical fiber link under test and provide a complete mapping of the optical fiber link. As such, an OTDR measurement may comprise multiple OTDR acquisitions performed with different pulse widths or other varying conditions. One or more OTDR traces acquired for a given OTDR measurement may be saved as part of an OTDR measurement data file or files.

### OTDR dynamic range

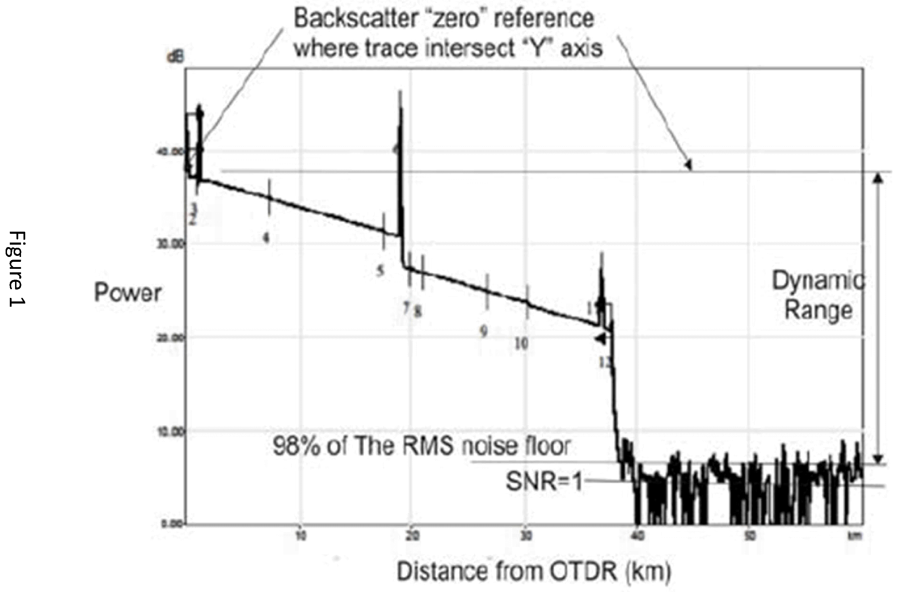

Referring to Figure 1, the dynamic range is a key parameter for assessing an OTDR device. It provides an indicator as the potential reach of a given OTDR device. The dynamic range is function of the OTDR selected pulse width, laser power and averaging number. The dynamic range is defined by Telcordia GR-196-CORE i02 as the amount of fiber attenuation that causes the backscatter signal to reach the 98 percent noise floor level.

The dynamic range is defined as the signal level at the output connector of the OTDR device divided by the noise level of the OTDR trace:
$DR = Injection Level / Trace noise level$

As explained herein-above, each OTDR acquisition generally involves propagating a large number of substantially identical light pulses in the optical fiber link and averaging the results. The OTDR trace is the result obtained from such acquisition averaging and the averaging number corresponds to the number of acquisitions being averaged to obtain the OTDR trace. At low signal level, the dominant noise contributor is electronic noise, which appears as white noise. Electronic noise level is therefore the dominant noise contributor to the dynamic range and is inversely proportional to the square root of the averaging number:
$DR = Injection Level / \left(Electronic Noise Level/SQRT\left(Averaging number\right)\right)$

Accordingly, the dynamic range can be improved by increasing the averaging number.

### OTDR coherent noise

The manufacturing process of optical fibers produces small fluctuations in the optical fiber structure along any segment of optical fiber. When such fluctuations interact with the OTDR test pulses, it creates interferences and modulations that produce a backscattering pattern in the acquired OTDR trace.

When OTDR measurements are repeated over the same optical fiber, a similar coherent noise pattern is found. However, because the structural fluctuations along optical fibers are random, OTDR measurements performed on a different optical fiber show a different coherent noise pattern.

The coherent noise is determined by the structure of the optical fiber and therefore cannot be reduced by increasing the averaging number.

### OTDR event detection

OTDR event detection is based on filtering and thresholding. Events associated with high insertion loss relative to noise can be easily detected. For low-loss events (such as, e.g., a low-loss splice), which are more likely to be hidden into noise, spatial averaging is typically used, which reduces the noise level and improves detection sensitivity. Events to be detected are then widened by the spatial filter, which reduces the spatial resolution of the detection algorithm. Closely spaced events therefore become difficult to distinguish from one another.

### Summing traces from multiple optical fibers

As explained herein-above, the dominant noise contributor to the OTDR dynamic range is electronic noise and it can be reduced using OTDR acquisition averaging.

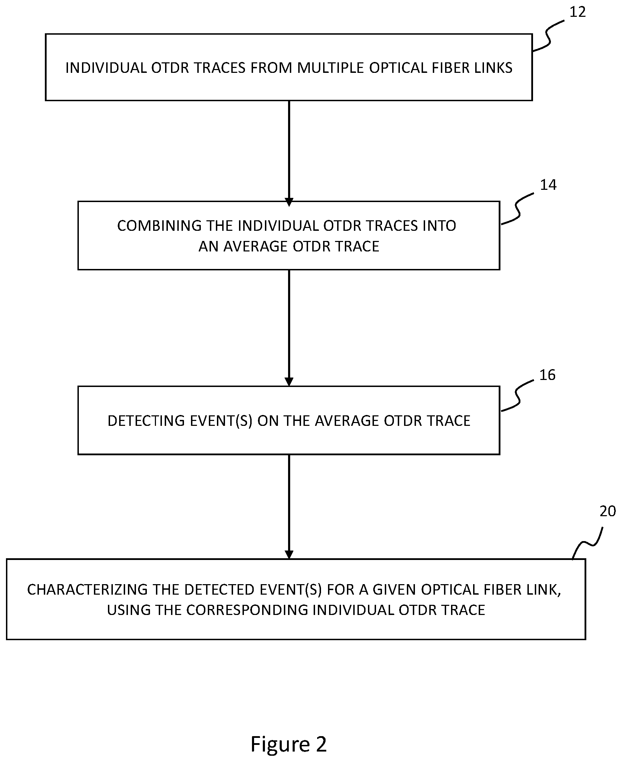

Referring to Figure 2, there is proposed herein to gain even more dynamic range by numerically averaging (or summing) OTDR measurements obtained for multiple co-located optical fiber links, such as the multiple optical fiber links of a same optical fiber cable, such as a ribbon. The result of such averaging is referred to herein as an average OTDR trace. It was found that averaging data from distinct optical fiber links helps reduce both coherent and electronic noise. The average OTDR trace may therefore be used to perform OTDR event detection with an increased detection sensitivity.

The optical fiber links are herein said to be correlated in that they can be assumed to share the same or a similar optical fiber lengths and the same set of optical components (splices, mating connectors, splitters, etc.) distributed at the same or similar positions along each optical fiber link. Such an approach has the advantage of increasing the signal-to-noise ratio by a factor related to the number of co-located optical fiber links. Of note is that optical fibers within a high fiber count cable (which can count 1728 optical fibers for example) may have slightly different lengths depending on their location within the cable. They will still have the same set of optical components at only slightly different positions. Of course, tolerances in lengths and positions may be added in the analysis to account for these differences.

We will refer herein to correlated optical fiber links, which can be described as optical fiber links that share similar features - such as components are at the same positions, same end-to-end losses and same general physical properties. Such correlated optical fiber links are typically found in sets of optical fiber links that are co-located. For example, the multiple fibers part of a same ribbon cable fibers will typically have the same length and present similar optical components and losses. Other examples include multi-core fibers and fibers that share only part of their length, as in passive optical networks (PON). Any fibers showing a similar set of features can be considered relevant in this analysis.

Accordingly, in step 12, OTDR acquisitions are performed toward each of the plurality of optical fiber links, to obtain a plurality of individual OTDR traces respectively corresponding to the plurality of individual optical fiber links. In some embodiments, the OTDR acquisition device may be alternately connected towards the individual optical fiber links via an optical switch.

In step 14, the plurality of OTDR traces are combined to provide an average OTDR trace which combines OTDR acquisitions respectively performed toward the plurality of individual optical fiber links. The simplest way to combine the OTDR traces is to numerically average or sum all the individual traces for each point in distance. Other combinations methods may also be envisaged in special cases, such as a weighted average for example.

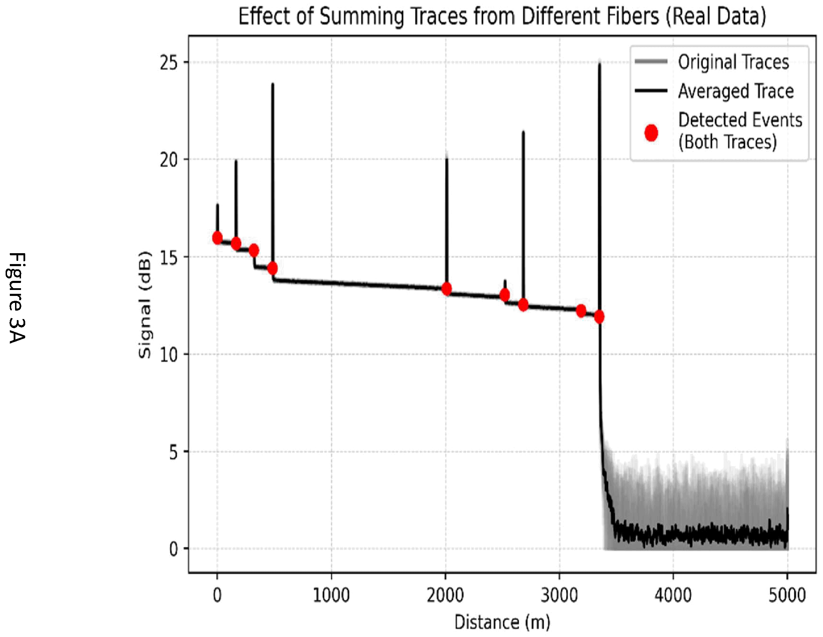

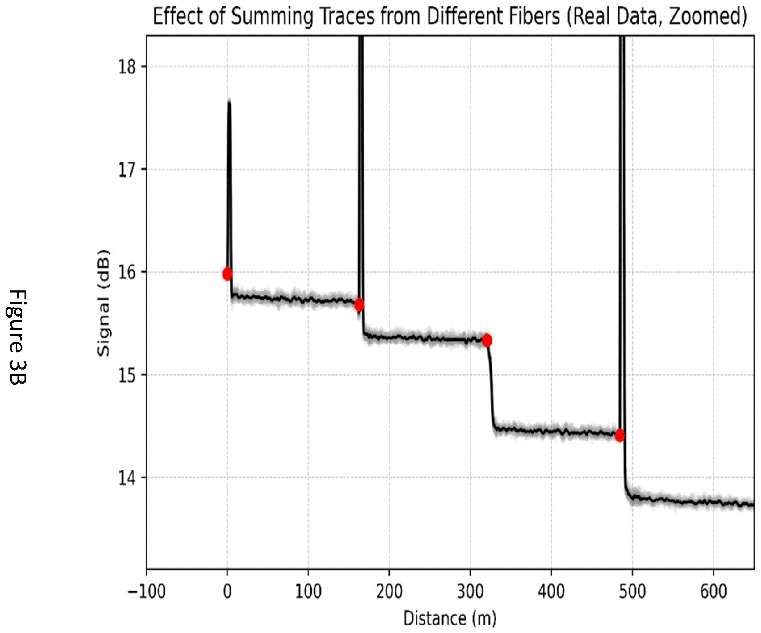

As shown in Figures 3A and 3B, summing or averaging traces from different optical fiber links has the same effect on electronic noise as increasing the averaging number for a single optical fiber link. Namely, the RMS noise is reduced by a factor corresponding to the square root of n, where "n" is the number co-located optical fiber links over which the average OTDR trace is averaged. For example, averaging traces over 12 / 24 optical fiber links of a multifiber cable improves the dynamic range by a factor of 3.5 / 4.9, which corresponds to 2.7 / 3.5 dB. In the case of high fiber count cables employed in data centers, the number of optical fiber links used in the averaging may reach 1728 for example.

This method takes advantage of the mathematical properties of the noise present in OTDR traces to increase the event detection sensitivity on correlated optical fiber links. As a result, the proposed method can shorten measurement time when analyzing related optical fiber links and improve sensitivity for detecting small-loss events such as splices. The resulting OTDR trace offers a cleaner and more robust OTDR measurement by aggregating event data across multiple co-located optical fiber links.

In step 16, the average OTDR trace is analyzed to detect and derive distance(s) of event(s) along the optical fiber links.

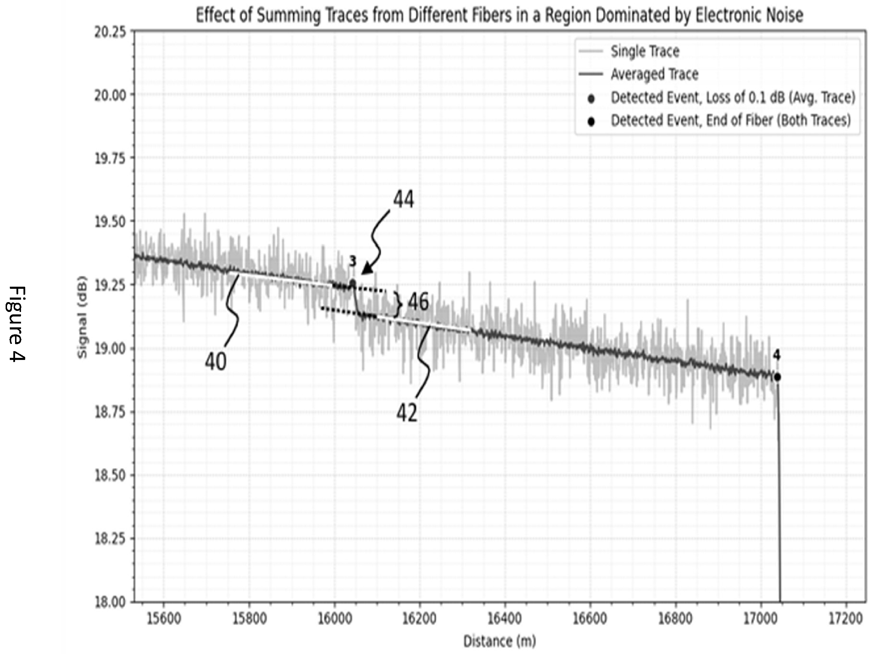

Figure 4 shows an individual OTDR trace (single trace) compared to an average OTDR trace obtained by averaging over 100 individual optical fiber links in a region of the trace where the noise is dominated by electronic noise. It shows that averaging traces from multiple co-located optical fiber links has the effect of reducing the electronic noise. Then, assuming that the co-located optical fiber links used for deriving the average OTDR trace are correlated, i.e. components such as splices and connectors are at the same positions along the links, this has the effect of improving the detection sensitivity for each event that is common among the co-located optical fiber links.

In this way, some events that may not be detectable on individual OTDR traces may appear to be detected on the average OTDR trace. Then, in step 20, once the event is detected, its known distance may be used to characterize it for a given optical fiber link among the plurality of optical fiber links, by analyzing the OTDR trace corresponding to the given optical fiber link at the event distance.

For example, in the case of a reflective event, such as one created by the presence of a mating connector along the optical fiber links, analyzing the OTDR trace corresponding to the given optical fiber link comprises estimating a value of the reflectance and a value of the loss associated with the event. In the case of a small-loss event such one created by a splice along the optical fiber links, analyzing the OTDR trace corresponding to the given optical fiber link comprises estimating the value of the splice loss. Even if the splice is not detectable on the individual OTDR trace, once its position is known, the OTDR trace may be analyzed at the identified distance corresponding to the splice to find the corresponding loss. Referring to Figure 4, methods known in the art for measuring a splice loss may comprise fitting lines 40, 42 (e.g., using a Least Squares Approximation (LSA) method) before and after the identified distance 44 of the splice and deriving the splice loss by computing a difference 46 between the two fitted lines 40, 42 at the distance corresponding to the event.

In other embodiments, the average OTDR trace may be used to derive a value of an average reflectance and/or an average loss associated with the detected event(s) over the plurality of optical fiber links.

The average OTDR trace also improves usability by offering a consolidated view of all detected events on a single signal with reduced noise. Furthermore, it serves as a reference for templating, enabling the reinsertion of previously missed events into individual fiber measurements. Consequently, the method improves the fidelity of each OTDR trace and the accuracy of event detection across the co-located optical fiber links.

### Summing traces from multiple optical fibers - Coherent noise

The coherent noise is determined by the structure of the optical fiber and is repeatable for a given fiber. The coherent noise on individual fibers is inversely proportional to the laser width. It therefore cannot be reduced by increasing the averaging number on a single optical fiber link.

However, because the coherent noise is unique to each individual fiber, summing/averaging traces from multiple co-located optical fiber links also has the effect of reducing the coherent noise on the average OTDR trace. More specifically, assuming OTDR traces were acquired in the same conditions for all individual optical fiber links, the coherent noise is reduced by a factor of sqrt(n), where "n" is the number co-located optical fiber links over which the average OTDR trace is averaged.

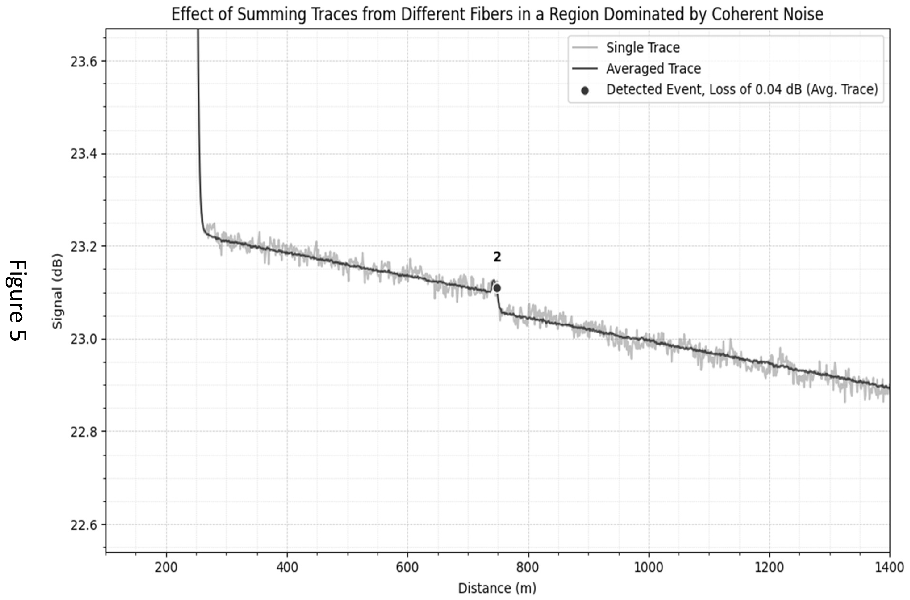

Figure 5 shows an individual OTDR trace (single trace) compared to an average OTDR trace obtained by averaging over 100 individual optical fiber links in a region of the trace where the noise is dominated by coherent noise. It shows that averaging traces from multiple co-located optical fiber links also has the effect of reducing the coherent noise. Then, assuming that the co-located optical fiber links used for deriving the average OTDR trace are correlated, i.e. components such as splices and connectors are at the same positions along the links, this has the effect of even further improving the detection sensitivity for each event that is common among the co-located optical fiber links.

### Templating and insertion of missed events

Averaging measurements from multiple co-located optical fiber links reduces the apparent noise level on the average OTDR trace which improves event detection sensitivity. This is particularly relevant in the case of low-loss events, such as splices, that are difficult to detect on each individual OTDR traces. In some instances, this process can therefore uncover events that were impossible to detect on individual measurements. By combining events from both individual and average traces, the analysis of each optical fiber link becomes significantly more sensitive.

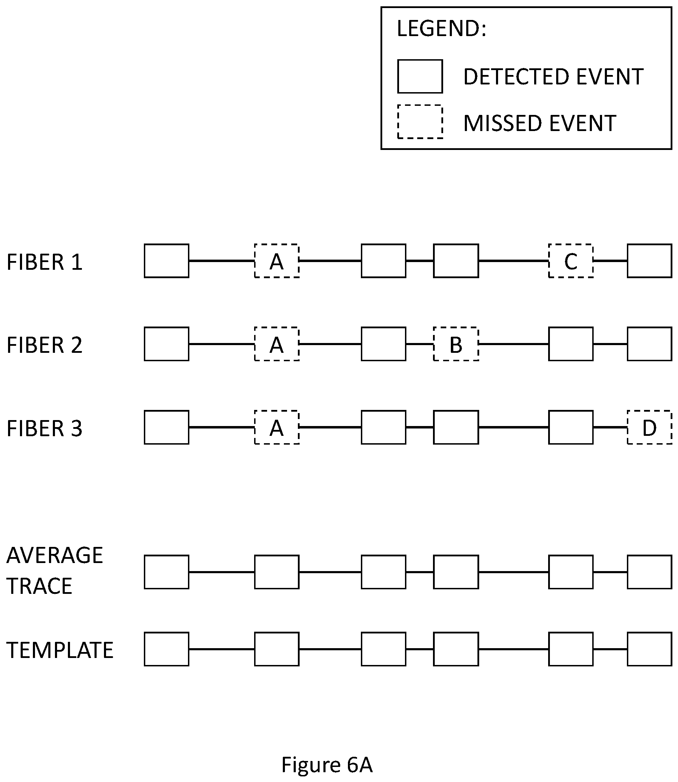

Figure 6A illustrates how events detected on the average OTDR trace may be used to expand event analysis for individual optical fiber links. From the average OTDR trace, events are detected along the optical fiber links and their respective distances are derived to produce a list of events defining the detected events based on their respective distance. The list of events derived from the average trace is illustrated as six (6) plain boxes, representing the detected events along the optical fiber links. This list of events may then be used as a template to analyze the individual OTDR traces (last line). This template defines the detected events based on their respective distance along the optical fiber links. In some instances, the analysis of the average OTDR trace may further identify, for each detected event, a corresponding type of event. The type of event characterizes the type of component or perturbation that generated the event such as a fusion splice, a mating connector, an optical splitter, an end of fiber, a fiber breakage, a bend, etc. The type of each event may be identified based on the combination of reflectivity, insertion loss or other properties of the event. For example, a small-loss non-reflective event will be identified as a splice, etc. In such cases, the template may therefore further include, for each event listed, a corresponding type of event.

The top three (3) lines illustrate the list of events that would be detected based on the individual OTDR traces only (Fiber 1, Fiber 2, Fiber 3), without the help of the average OTDR trace. The plain boxes illustrate events that are detected and letter boxes (A, B, C, D) illustrate events that would be missed on these individual OTDR traces. It shows that event A would have been missed completely without the average OTDR trace, but is uncovered using the average OTDR trace. Events B, C and D would have been detected on some individual OTDR traces but missed on some others. However, using the list of events (template) obtained from the average OTDR trace, all events are uncovered.

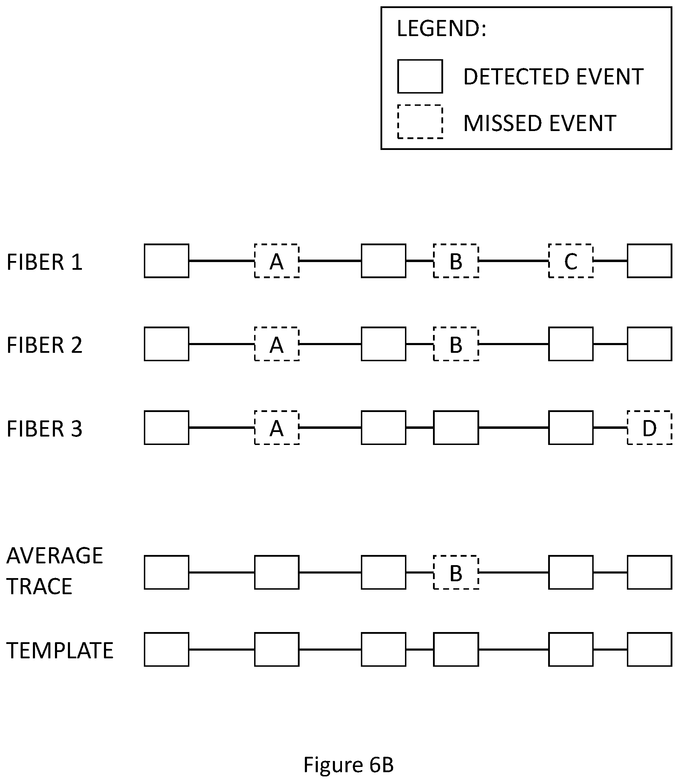

Also, illustrated in Figure 6B is a case where an event (event B) is not detected on the average OTDR trace but is detected on at least one of the individual OTDR traces (Fiber 3). In such cases, the event detected on the individual OTDR trace, may be used to further expand the template by including this event in the list of events.

The template can then be reapplied to each individual OTDR measurement. Therefore, for a given one of the optical fiber links, the corresponding individual OTDR trace may be analyzed using the template to derive a table of events. For example, the table of events may define a distance value and at least one of an insertion loss value and reflectance value for each event of the table. Applying the template that was generated based on the average OTDR trace to each of the individual OTDR measurements provides improved event detection sensitivity and therefore a more complete characterization of each optical fiber links which includes events that would otherwise have remained undetected.

### Multipulse analysis

It will be understood that OTDR measurements performed on individual optical fiber links may comprise a plurality of OTDR acquisitions performed with different pulse widths or other varying conditions, to obtain a corresponding plurality of OTDR traces for each given optical fiber link. In such cases, an average OTDR trace may be obtained for each pulse width or a single average OTDR trace may be derived for one selected pulse width. In any case, the step of characterizing an event for a given optical fiber link may include a multipulse analysis of the plurality of OTDR traces corresponding to the given optical fiber link, wherein some event(s) are characterized based on a first pulse width and other event(s) are characterized based on a second pulse width.

### Average trace as the reporting trace

As detailed in the previous section, aggregating data from multiple fiber sources increases the dynamic range and consequently improves event detection sensitivity. By leveraging a higher signal-to-noise ratio and incorporating key metrics and events, the average OTDR trace may also offer a cleaner and more accurate representation of the optical fiber links under test.

Presenting the averaged trace to end users after the templating process provides a low noise representation which also groups all detected events along the optical fiber links. This improves usability by simplifying result interpretation and delivering a single, high-quality OTDR trace that consolidates all events detected across the optical fiber links.

### Averaging traces acquired with acquisition different parameters

As explained herein-above, OTDR traces may be acquired with varying acquisition parameters, such as, e.g., varying pulse widths, averaging numbers and wavelengths. Some adaptations may be required before averaging individual OTDR traces acquired with different parameters, in order to obtain a valuable average OTDR trace. In the case of varying pulse widths, one possible approach is to numerically process individual OTDR traces to emulate a pulse response which corresponds to a resolution that is smaller or equal to the lowest resolution among the individual traces to be averaged. This may be achieved by applying a filtering operation. For example, individual OTDR traces acquired with a smaller pulse width may be filtered by applying a convolution with the pulse response equivalent to that of the individual OTDR trace having the lowest resolution.

### Shared optical fiber sections

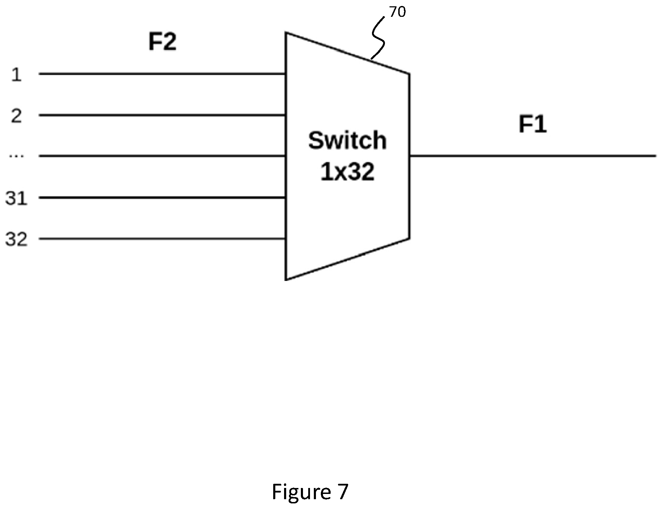

Referring to Figure 7, in some network configurations, an optical switch or optical multiplexer 70 may be inserted along a multifiber cable segment to combine signals from multiple co-located optical fibers F2 (of a multifiber cable or ribbon for example) toward a single optical fiber F1. OTDR measurement may be performed from the multifiber cable side toward the switch or multiplexer using a multifiber OTDR acquisition device.

OTDR acquisitions may be performed toward each of the plurality of optical fibers F2, to obtain a plurality of individual OTDR traces. On the individual OTDR traces, each optical fiber F2 will exhibit its own unique backscattering pattern, whereas the F1 fiber segment is shared across all the tested optical fiber links and therefore all the individual OTDR measurements. The individual OTDR traces may be averaged as described herein-above.

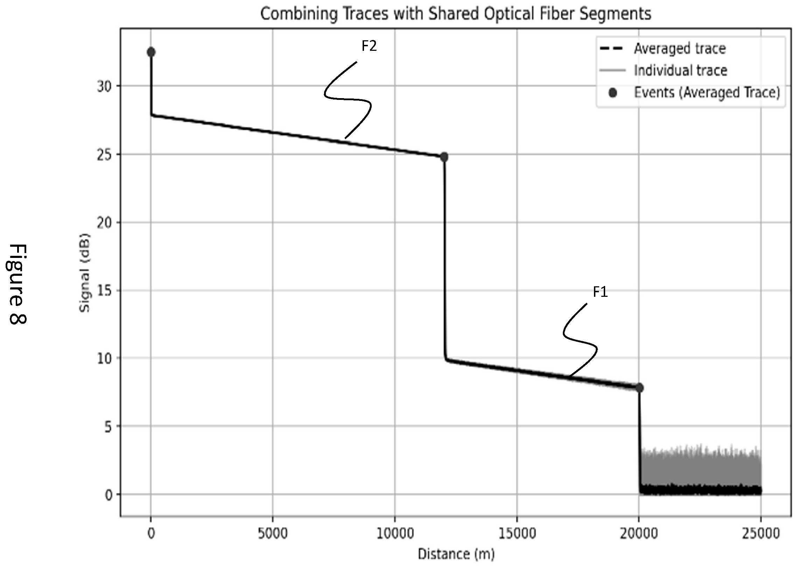

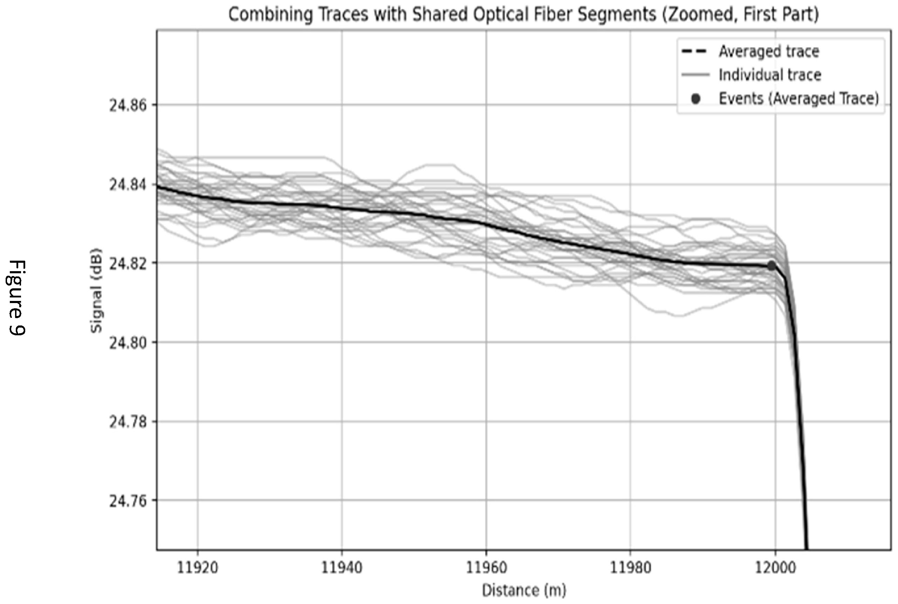

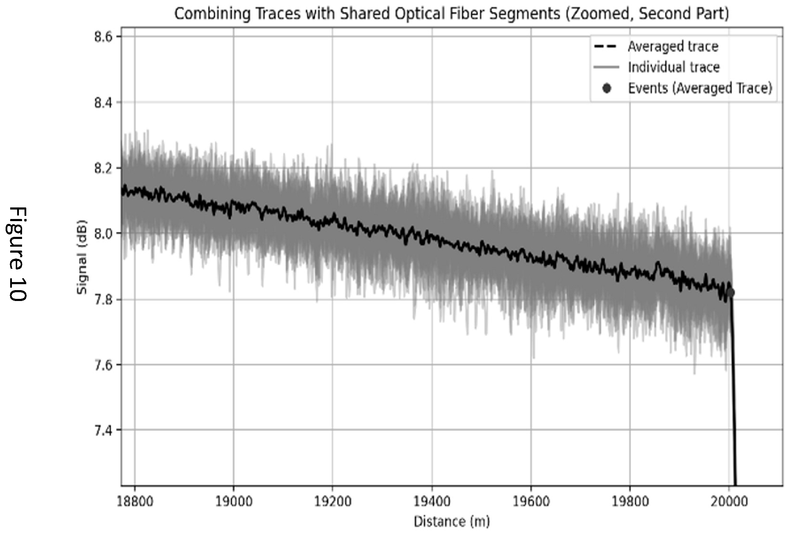

Figure 8 illustrates individual OTDR traces and an average OTDR derived over both F1 and F2 optical fiber segments. Figure 9 zooms in over the F2 segment of the traces whereas Figure 10 zooms in over the F1 segment of the traces.

In the near portion of the individual OTDR traces which correspond to the F2 optical fiber segments, the average OTDR trace will exhibit reduced electronic and coherent noise, thereby increasing event detection sensitivity. Over the portion of the OTDR traces corresponding to the F1 fiber segment, electronic noise will be reduced but the coherent noise will remain unchanged. Although coherent noise cannot be reduced over the F1 segment, the average OTDR trace remains particularly advantageous because although coherent noise cannot be reduced over the F1 portion, noise over that segment is dominated by electronic noise for which averaging is effective. As to the F2 portions of the OTDR traces, they are dominated by coherent noise, which is efficiently reduced over that portion.

### Duplicate OTDR traces

It should be noted that averaging OTDR measurements obtained for multiple co-located optical fiber links may not provide the expected results in special cases where the averaged OTDR measurements were not all acquired over distinct optical fiber links. For example, the data set may include duplicate OTDR measurements if, e.g., the user has inadvertently or fraudulently repeated two or more OTDR measurements over the same fiber. In such case, and especially if the number of duplicate measurements is significant, the gain in dynamic range obtained by averaging the OTDR measurements may reach expectations. For that reason, the method and system may further include a duplicate detection step and a step of notifying the user that duplicate measurements were detected. When duplicate measurements are detected, the method and system may also adapt by removing the duplicate measurements before combining the plurality of OTDR traces to produce the average OTDR trace.

For example, duplicate detection may be performed using methods described, e.g., in U.S. patent 11,125,648 to Perron, which compares the backscattering patterns of a first and a second OTDR traces over a given continuous optical fiber section by calculating a correlation coefficient between the backscattering patterns acquired over that optical fiber section. Detecting duplicate measurements may help generate a higher-quality average trace from co-located optical fiber links.

### Example of OTDR device architecture

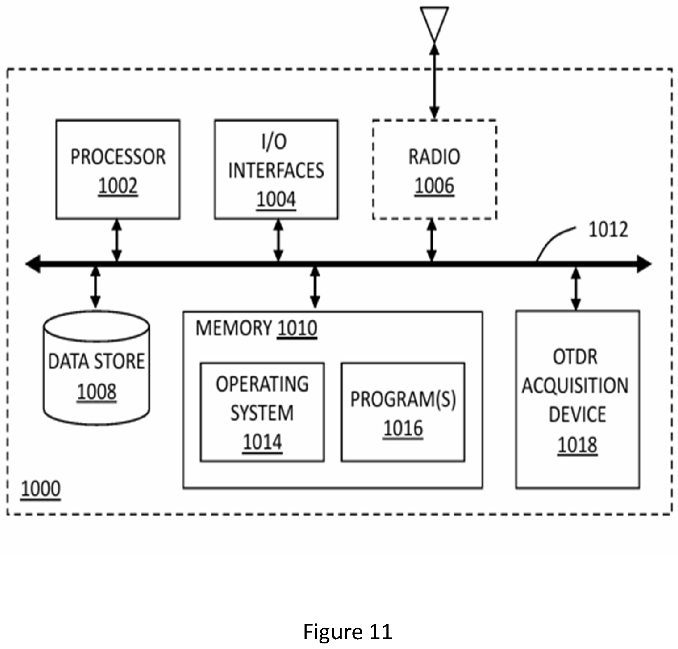

Figure 11 is a block diagram of an OTDR device 1000 suitable for implementing the OTDR method described herein-above. The OTDR device 1000 may comprise a digital device that, in terms of hardware architecture, generally includes a processor 1002, input/output (I/O) interfaces 1004, an optional radio 1006, a data store 1008, a memory 1010, as well as an optical test device including an OTDR acquisition device 1018. It should be appreciated by those of ordinary skill in the art that Figure 11 depicts the OTDR device 1000 in a simplified manner, and a practical embodiment may include additional components and suitably configured processing logic to support known or conventional operating features that are not described in detail herein. A local interface 1012 interconnects the major components. The local interface 1012 can be, for example, but not limited to, one or more buses or other wired or wireless connections, as is known in the art. The local interface 1012 can have additional elements, which are omitted for simplicity, such as controllers, buffers (caches), drivers, repeaters, and receivers, among many others, to enable communications. Further, the local interface 1012 may include address, control, and/or data connections to enable appropriate communications among the aforementioned components.

The processor 1002 is a hardware device for executing software instructions. The processor 1002 may comprise one or more processors, including central processing units (CPU), auxiliary processor(s) or generally any device for executing software instructions. When the OTDR device 1000 is in operation, the processor 1002 is configured to execute software stored within the memory 1010, to communicate data to and from the memory 1010, and to generally control operations of the OTDR device 1000 pursuant to the software instructions. In an embodiment, the processor 1002 may include an optimized mobile processor such as optimized for power consumption and mobile applications. The I/O interfaces 1004 can be used to receive user input from and/or for providing system output. User input can be provided via, for example, a keypad, a touch screen, a scroll ball, a scroll bar, buttons, barcode scanner, and the like. System output can be provided via a display device such as a liquid crystal display (LCD), touch screen, and the like, via one or more LEDs or a set of LEDs, or via one or more buzzer or beepers, etc. The I/O interfaces 1004 can be used to display a graphical user interface (GUI) that enables a user to interact with the OTDR device 1000 and/or output at least one of the values derived by the OTDR analyzing module.

The radio 1006, if included, may enable wireless communication to an external access device or network. Any number of suitable wireless data communication protocols, techniques, or methodologies can be supported by the radio 1006, including, without limitation: RF; IrDA (infrared); Bluetooth; ZigBee (and other variants of the IEEE 802.15 protocol); IEEE 802.11 (any variation); IEEE 802.16 (WiMAX or any other variation); Direct Sequence Spread Spectrum; Frequency Hopping Spread Spectrum; Long Term Evolution (LTE); cellular/wireless/cordless telecommunication protocols (e.g. 3G/4G, etc.); NarrowBand Internet of Things (NB-loT); Long Term Evolution Machine Type Communication (LTE-M); magnetic induction; satellite data communication protocols; and any other protocols for wireless communication. The data store 1008 may be used to store data, such as OTDR traces and OTDR measurement data files. The data store 1008 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1008 may incorporate electronic, magnetic, optical, and/or other types of storage media.

The memory 1010 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 1010 may incorporate electronic, magnetic, optical, and/or other types of storage media. Note that the memory 1010 may have a distributed architecture, where various components are situated remotely from one another, but can be accessed by the processor 1002. The software in memory 1010 can include one or more computer programs, each of which includes an ordered listing of executable instructions for implementing logical functions. In the example of Figure 11, the software in the memory 1010 includes a suitable operating system (O/S) 1014 and computer programs 1016. The operating system 1014 essentially controls the execution of other computer programs and provides scheduling, input-output control, file and data management, memory management, and communication control and related services. The program(s) 1016 may include various applications, add-ons, etc. configured to provide end-user functionality with the OTDR device 1000. For example, example programs 1016 may include a web browser to connect with a server for transferring OTDR measurement data files, a dedicated OTDR application configured to control OTDR acquisitions by the OTDR acquisition device 1018, set OTDR acquisition parameters, analyze OTDR traces obtained by the OTDR acquisition device 1018 and display a GUI related to the OTDR device 1000. For example, the dedicated OTDR application may embody an OTDR analysis module configured to analyze acquired OTDR traces in order to characterize the optical fiber link under test, and produce OTDR measurement data files.

It is noted that, in some embodiments, the I/O interfaces 1004 may be provided via a physically distinct mobile device (not shown), such as a handheld computer, a smartphone, a tablet computer, a laptop computer, a wearable computer or the like, e.g., communicatively coupled to the OTDR device 1000 via the radio 1006. In such cases, at least some of the programs 1016 may be located in a memory of such a mobile device, for execution by a processor of the physically distinct device. The mobile device may then also include a radio and be used to transfer OTDR measurement data files toward a remote test application residing, e.g., on a server.

It should be noted that the OTDR device shown in Figure 11 is meant as an illustrative example only. Numerous types of computer systems are available and can be used to implement the OTDR device.

### Example of OTDR acquisition device architecture

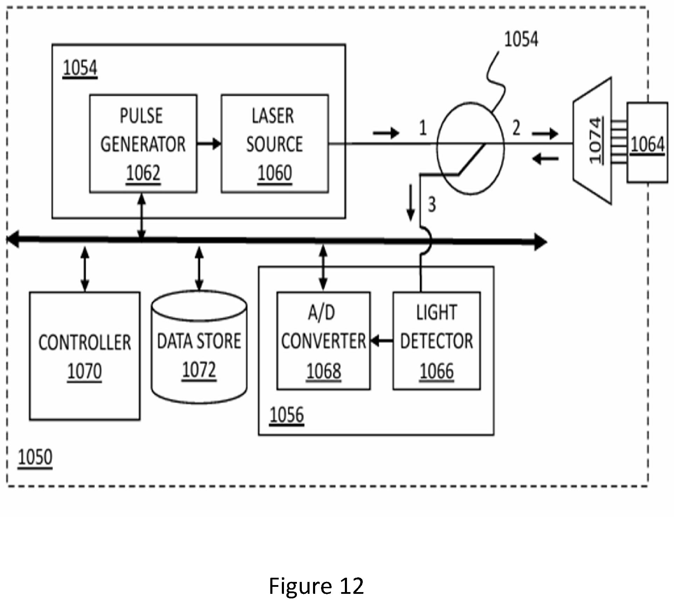

Figure 12 is a block diagram an embodiment of an OTDR acquisition device 1050 which may embody the OTDR acquisition device 1018 of the OTDR device 1000 of Figure 11.

The OTDR acquisition device 1050 is connectable toward the tested optical fiber link(s) via an output interface 1064, for performing OTDR acquisitions toward the optical fiber link. In some embodiments, the OTDR acquisition device 1050 may further comprise or its output interface 1064 be connected to an optical switch 1074, in order to direct the test signal towards individual optical fiber links to be tested in alternance. In the illustrated embodiment, the output interface 1064 is a multifiber interface for connected to an optical fiber cable or ribbon for example.

The OTDR acquisition device 1050 comprises conventional optical hardware and electronics as known in the art for performing OTDR acquisitions over an optical fiber link. The OTDR acquisition device 1050 comprises a light generating assembly 1054, a detection assembly 1056, a directional coupler 1058, as well as a controller 1070 and a data store 1072.

The light generating assembly 1054 is embodied by a laser source 1060 driven by a pulse generator 1062 to generate the OTDR test signal comprising test light pulses having desired characteristics. As known in the art, the light generating assembly 1054 is adapted to generate test light pulses of varied pulse widths, repetition periods and optical power through a proper control of the pattern produced by the pulse generator 1062. One skilled in the art will understand that it may be beneficial or required by the application to perform OTDR measurements at various different wavelengths. For this purpose, in some embodiments, the light generating assembly 1054 is adapted to generate test light pulses having varied wavelengths by employing a laser source 1060 that is tunable for example. It will be understood that the light generating assembly 1054 may combine both pulse width and wavelength control capabilities. Of course, different and/or additional components may be provided in the light generating assembly, such as modulators, lenses, mirrors, optical filters, wavelength selectors and the like.

The light generating assembly 1054 is coupled to the output interface 1064 of the OTDR acquisition device 1050 through a directional coupler 1058, such as a circulator, having three or more ports. The first port is connected to the light generating assembly 1054 to receive the test light pulses therefrom. The second port is connected toward the output interface 1064. The third port is connected to the detection assembly 1056. The connections are such that test light pulses generated by the light generating assembly 1054 are coupled to the output interface 1064 and that the return light signal arising from backscattering and reflections along the optical fiber link 110 is coupled to the detection assembly 1056.

The detection assembly 1056 comprises a light detector 1066, such as a photodiode, an avalanche photodiode or any other suitable photodetector, which detects the return light signal corresponding to each test light pulse, and an analog to digital converter 1068 to convert the electrical signal proportional to the detected return light signal from analog to digital in order to allow data storage and processing. It will be understood that the detected return light signal may of course be amplified, filtered or otherwise processed before or after analog to digital conversion. The power level of return light signal as a function of time, which is obtained from the detection and conversion above, is referred to as one acquisition of an OTDR trace. One skilled in the art will readily understand that in the context of OTDR methods and systems, each light acquisition generally involves propagating a large number of substantially identical light pulses in the optical fiber link and averaging the results, in order to improve the Signal-to-Noise Ratio (SNR). In this case, the result obtained from averaging is herein referred to as an OTDR trace.

Of course, the OTDR acquisition device 1050 may also be used to perform multiple acquisitions with varied pulse widths to obtain a multi-pulsewidth OTDR measurement.

The OTDR acquisition device 1050, and more specifically the light generating assembly 1054 is controlled by the controller 1070. The controller 1070 is a hardware logic device. It may comprise one or more Field Programmable Gate Array (FPGA); one or more Application Specific Integrated Circuits (ASICs) or one or more processors, configured with a logic state machine or stored program instructions. When the OTDR acquisition device 1050 is in operation, the controller 1070 is configured to control the OTDR measurement process. The controller 1070 controls parameters of the light generating assembly 1054 according to OTDR acquisition parameters that are either provided by the operator of the OTDR software or otherwise determined by program(s) 1016.

The data store 1072 may be used to cumulate raw data received from the detection assembly 1056, as well as intermediary averaged results and resulting OTDR traces. The data store 1008 may include any of volatile memory elements (e.g., random access memory (RAM, such as DRAM, SRAM, SDRAM, and the like)) or the like and it may be embedded with the controller 1070 or distinct.

The OTDR traces acquired by the OTDR acquisition device 1050 may be received and analyzed by one or more of the computer programs 1016 in accordance with the herein-described methods fand/or stored in data store 1008 for further processing.

It should be noted that the architecture of the OTDR acquisition device 1050 as shown in Figure 12 is meant as an illustrative example only. Numerous types of optical and electronic components are available and can be used to implement the OTDR acquisition device.

It will be appreciated that some embodiments described herein may include one or more generic or specialized processors ("one or more processors") such as microprocessors; Central Processing Units (CPUs); Digital Signal Processors (DSPs): customized processors such as Network Processors (NPs) or Network Processing Units (NPUs), Graphics Processing Units (GPUs), or the like; Field Programmable Gate Arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more Application Specific Integrated Circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory), Flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

Although the present disclosure has been illustrated and described herein with reference to specific embodiments and examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following claims.

The embodiments described above are intended to be exemplary only and one skilled in the art will recognize that numerous modifications can be made to these embodiments without departing from the scope of the invention. The scope of the invention is therefore intended to be limited solely by the appended claims.

## Claims

1. An OTDR method comprising:
performing an OTDR acquisition toward each of a plurality of optical fiber links, wherein each OTDR acquisition is performed by propagating in the corresponding optical fiber link, a pulsed test signal and detecting corresponding return light from the optical fiber link so as to obtain an OTDR trace representing backscattered and reflected light as a function of distance in the optical fiber links, thereby obtaining a plurality of OTDR traces respectively corresponding to said plurality of optical fiber links;
combining said plurality of OTDR traces to provide an average OTDR trace which combines OTDR acquisitions respectively performed toward said plurality of optical fiber links; and
from said average OTDR trace, detecting and deriving a distance of at least one event along the optical fiber links.

2. The OTDR method as claimed in claim 1, further comprising:
using the distance of the detected at least one event derived from the average OTDR trace, characterizing the at least one event for a given optical fiber link among the plurality of optical fiber links based on the OTDR trace corresponding to the given optical fiber link.

3. The OTDR method as claimed in claim 2, wherein said step of characterizing the at least one event comprises estimating a value of reflectance and a value of loss associated with the at least one event.

4. The OTDR method as claimed in claim 2, wherein said at least one event corresponds to a splice and wherein said step of characterizing the at least one event comprises estimating a value of a splice loss associated with the splice for the given optical fiber link.

5. The OTDR method as claimed in any one of claims 1 to 4, further comprising:
from the average OTDR trace, deriving a value of at least one of an average reflectance and an average loss associated with the at least one event over the plurality of optical fiber links.

6. The OTDR method as claimed in any one of claims 1 to 4, further comprising:
from said average OTDR trace, detecting and deriving distances of a plurality of events along the optical fiber links to produce a list of events defining the detected events based on their respective distance; and
analyzing the OTDR trace corresponding to a given optical fiber link among the plurality of optical fiber links using the produced list of events to derive therefrom a table of events defining a distance value and at least one of an insertion loss value and reflectance value for each event of the table.

7. The OTDR method as claimed in claim 6, further comprising:
based on one of the plurality of OTDR traces, detecting and deriving a distance of at least another event which is missing from the list of events produced from the average OTDR trace; and
adding the at least another event to said list of events.

8. The OTDR method as claimed in any one of claims 2 to 4,
wherein a plurality of OTDR acquisitions are performed for the given optical fiber link using mutually different pulse widths of the pulsed test signal to obtain a corresponding plurality of OTDR traces for the given optical fiber link; and
wherein the step of characterizing the at least one event for the given optical fiber link is based on the plurality of OTDR traces corresponding to the given optical fiber link.

9. The OTDR method as claimed in any one of claims 1 to 8, wherein the plurality of OTDR traces respectively corresponding to said plurality of optical fiber links are not all performed with the same pulse width of said pulsed test signal and wherein the OTDR method further comprises:
processing the OTDR traces to emulate a pulse response which corresponds to a resolution that is smaller or equal to the lowest resolution among the individual traces to be averaged.

10. The OTDR method as claimed in any one of claims 1 to 9, further comprising:
comparing individual OTDR traces from the plurality of OTDR traces from one another to detect duplicate OTDR traces based on a similarity of a backscattering pattern.

11. The OTDR method as claimed in claim 10, further comprising:
removing the detected duplicate OTDR traces from the plurality of OTDR traces before combining said plurality of OTDR traces to provide an average OTDR trace.

12. An OTDR device comprising:
an OTDR acquisition device connectable toward an end of an optical fiber link for performing an OTDR acquisition toward each of a plurality of optical fiber links, wherein each OTDR acquisition is performed by propagating in the corresponding optical fiber link, a pulsed test signal and detecting corresponding return light from the optical fiber link so as to obtain an OTDR trace representing backscattered and reflected light as a function of distance in the optical fiber links, thereby obtaining a plurality of OTDR traces respectively corresponding to said plurality of optical fiber links; and
a processing unit receiving the plurality of OTDR traces and configured for:
combining said plurality of OTDR traces to provide an average OTDR trace which combines OTDR acquisitions respectively performed toward said plurality of optical fiber links; and
from said average OTDR trace, detecting and deriving a distance of at least one event along the optical fiber links.

13. The OTDR device as claimed in claim 12, wherein the processing unit is further configured for:
using the distance of the detected at least one event derived from the average OTDR trace, characterizing the at least one event for a given optical fiber link among the plurality of optical fiber links based on the OTDR trace corresponding to the given optical fiber link.

14. The OTDR device as claimed in claim 13, wherein said at least one event corresponds to a splice and wherein said step of characterizing the at least one event comprises estimating a value of a splice loss associated with the splice for the given optical fiber link.

15. A computer program comprising instructions that, when executed by a processor, cause the processor to perform the steps of:
receiving a set of OTDR traces obtained from OTDR acquisitions performed toward each of a plurality of optical fiber links, wherein each OTDR acquisition is performed by propagating in the corresponding optical fiber link, a pulsed test signal and detecting corresponding return light from the optical fiber link so as to obtain an OTDR trace representing backscattered and reflected light as a function of distance in the optical fiber links, thereby obtaining a plurality of OTDR traces respectively corresponding to said plurality of optical fiber links;
combining said plurality of OTDR traces to provide an average OTDR trace which combines OTDR acquisitions respectively performed toward said plurality of optical fiber links; and
from said average OTDR trace, detecting and deriving a distance of at least one event along the optical fiber links.
